# EUROPEAN PATENT APPLICATION

(11) **EP 1 463 250 A2**
(43) Date of publication of application: **29.09.2004**
(21) Application number: 04394015.4
(22) Date of filing: 24.03.2004
(51) Int. Cl.: H04L 12/58

(54) **Instant messaging to service bureau**

(30) Priority: 26.03.2003 US 397400
(71) Applicant: Nortel Networks Limited, St. Laurent, Quebec H4S 2A9 (CA)
(72) Inventor: Bokish, Bruce, Raleigh, North Carolina (US)
(74) Representative: Boyce, Conor

(57) **Abstract**

The present invention relates to facilitating instant messaging with an information service bureau, such as an operator or information service bureau or customer support center that has multiple information agents capable of responding to instant messages sent to a common address associated with the information service bureau. The incoming instant messages are received from users at a central location and routed to an appropriate information agent, preferably after being queued and upon an information agent becoming available. Any necessary address translation to forward the instant message to the appropriate information agent is provided at the central location. Responses to the instant message can be sent back through the central location or directly to the user; however, the instant message responses are either created or modified such that they appear to the user as coming from the central address, and not from the address of the particular servicing information agent.

## Description

### Field of the Invention

The present invention relates to facilitating communications using instant messaging, and in particular, relates to facilitating instant messaging with an information service bureau.

### Background of the Invention

The rapid acceptance of the Internet has changed the way in which people communicate. A significant number of letters and telephone calls have been replaced with email messages. Although email is an effective communication medium, ongoing online communications are often hampered because of the extra steps necessary to view, reply, and send email messages. Further, email provides no way of knowing if the person with whom someone is communicating is online at that particular moment. With these deficiencies, instant messaging (IM) has gained great popularity over email to facilitate immediate and ongoing online communications.

Typically, IM allows users to form a list of people with whom they wish to communicate. This list is often called a "buddy list," and most IM services allow users to communicate with anyone on their buddy list, assuming that the person is online at that given time. Generally, users will send an alert to those persons on their buddy list who are online prior to engaging in a conversation. Most IM services provide a small text window where two or more users can type messages that both users can instantly view. IM services not only allow users to send notes back and forth while online, they can also allow users to set up chat rooms to communicate with groups of users, and to share links to web sites as well as images, audio, and the like.

Given the wide acceptance of IM, there is a need to support IM with information service bureaus wherein numerous information agents can respond to queries from users. For example, providing IM capability to operator or information service centers, customer service centers, and like bureaus, would allow an increase in overall customer access as well as provide additional revenue and better customer support. Unfortunately, instant messages are generally sent directly from one user to another. In order to handle requests in an orderly and efficient fashion, information service bureaus need to funnel all requests to a central location and distribute the requests to information agents as they become available. Given the desire to funnel and queue queries through a central location, there is a need to support such instant messaging through a common location. There is a further need to be able to ensure that subsequent instant messages that are part of the same instant messaging session are directed to the appropriate information agent.

### Summary of the Invention

The present invention relates to facilitating instant messaging with an information service bureau, such as an operator or information service bureau or customer support center that has multiple information agents capable of responding to instant messages sent to a common address associated with the information service bureau. The incoming instant messages from users are received at a central location and routed to an appropriate information agent, preferably after being queued and upon an information agent becoming available. Any necessary address translation to forward the instant message to the appropriate information agent is provided at the central location. Responses to the instant message can be sent back through the central location or directly to the user; however, the instant message responses are either created or modified such that they appear to the user as coming from the central address, and not from the address of the particular servicing information agent. Sessions are created to ensure that related instant messages are associated with one another, and subsequent messages from the user are directed to the appropriate information agent. During the session, the instant messages from the information agent will appear to the user as if they were from the information service bureau using the central address. The address will encompass instant messaging addresses as well as user IDs and contact IDs as they are normally understood with respect to instant messaging.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment according to one embodiment of the present invention.
FIGURE 2 is a communication flow diagram illustrating the routing of messages sent to an information agent of a service bureau according to one embodiment of the present invention.
FIGURE 3 is a communication flow diagram illustrating the routing of an instant messaging response from an information agent of the service bureau to a user according to one embodiment of the present invention.
FIGURE 4 is a communication flow diagram illustrating the routing of an instant messaging response from an information agent of the service bureau to a user according to a second embodiment of the present invention.
FIGURE 5 is a communication flow diagram illustrating the routing of an instant messaging response from an information agent of the service bureau to a user according to a third embodiment of the present invention.
FIGURE 6 is a block representation of a queuing system according to one embodiment of the present invention.
FIGURE 7 is a block representation of an instant messaging proxy server according to one embodiment of the present invention.

### Detailed Description of the Preferred Embodiments

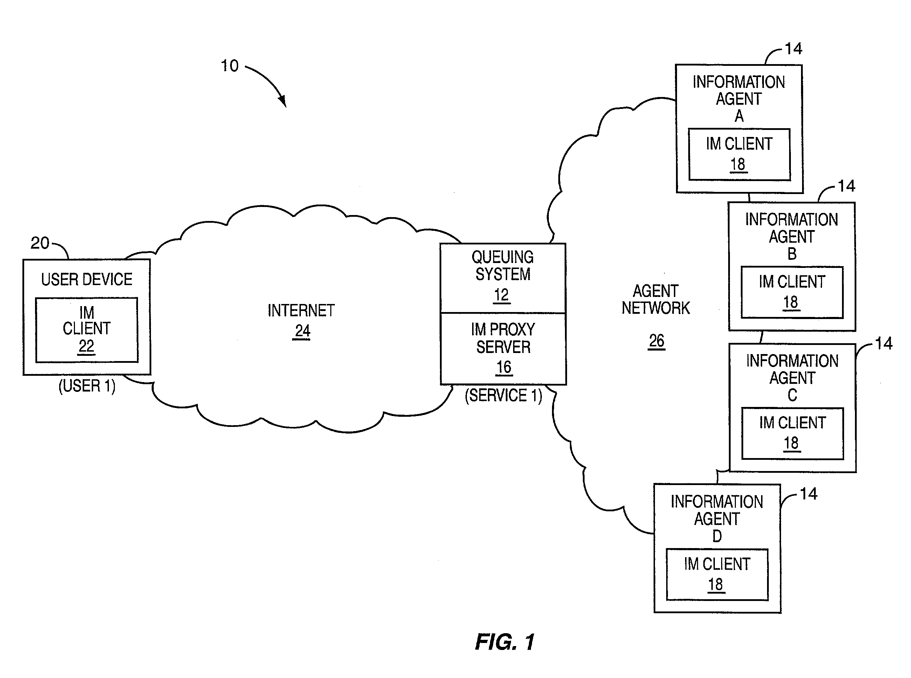

The present invention facilitates instant messaging between a user and an information agent that is part of an information service bureau. From the user's perspective, the information service bureau or a particular service provided thereby is associated with a common instant messaging address or identification (ID). For the sake of conciseness and clarity, the term "instant messaging address" will encompass the traditional buddy or contact ID or corresponding address. Accordingly, instant messages sent from the user to the information service bureau using the service bureau address will be received by an instant messaging proxy server, and subsequently routed to an appropriate one of a number of instant messaging clients associated with corresponding information agents. Once an information agent is assigned to a user, a session is established wherein messages between the user and the information agent will be associated with the session. All instant messages received from the information agent by the user may appear as if they were sent from the service bureau address, and not the address for the particular information agent. The instant messaging proxy server may be associated with a queuing system, which is capable of queuing incoming instant messages, determining when information agents are available, and assigning the instant messages to an available information agent. Further detail is provided below with exemplary communication call flow diagrams, after reviewing an exemplary communication environment 10, which is illustrated in Figure 1.

The queuing system 12 is associated with a number of information agents 14, as well as the instant messaging (IM) proxy server 16. Each information agent 14 is associated with a corresponding instant messaging client 18, which is capable of facilitating instant messaging with a user device 20 via its associated instant messaging client 22. Instant messages will be transmitted via the Internet 24 or available packet-switched network between the user device 20 and the IM proxy server 16. An agent network 26 will be used for instant and other messaging between the IM proxy server 16/queuing system 12 and the various information agents 14 (A-D). As noted, instant messages sent from the user via the user's IM client 22 are directed to a common address (Service 1) of the service bureau. Instant messages addressed to the common address are received by the IM proxy server 16, which will cooperate with the queuing system 12 to effectively place the instant message in a queue and wait for an appropriate information agent 14 to become available for responding to the instant message. The queuing system 12 and IM proxy server 16 may treat all instant messages the same, or may provide different users with different levels of service. As such, the user address or other identification indicia can be used to identify the user and determine if a certain level of service is required. Based on the level of service, if any, the instant message is queued until an appropriate information agent 14 becomes available.

The information agents 14 may alert the queuing system 12 when they become available, and the queuing system 12 will assign the next instant message to the available information agent 14. The instant message is then sent to the available information agent 14, who will take the necessary steps to respond to the user via instant messaging. During the queuing and routing of the original instant message, the queuing system 12 or IM proxy server 16 can associate the user with an instant messaging session, such that subsequent instant messages received from the user, most likely in response to an instant message from their servicing information agent 14, will not have to be queued and will be automatically routed to the proper information agent 14. These sessions may last for either a defined amount of time, for a certain number of instant messages received from the user, or upon the information agent 14 indicating that the session with that particular user is over. Once a session has ended, any subsequent instant message from the user received by the IM proxy server 16 will be treated as a new message that is not associated with the previous session, and as such, will be queued as a new message and assigned a new session. Notably, any given information agent 14 may handle multiple sessions at a given time, and will rely on the queuing system 12 to regulate the number of instant messaging sessions being handled at a given time by the information agent 14.

As noted, an object of the present invention is to allow instant messages from a user to be sent to a common instant messaging address, and be routed to an appropriate information agent 14. Further, subsequent messages associated with a given session should also be sent to the common address, be recognized as being associated with a given session and information agent 14, and be sent to that particular information agent 14. However, the manner in which the information agent 14 responds to the user can take numerous forms. Regardless of form, when an instant message is sent to a user from an information agent 14, those instant messages passing through the instant messaging proxy server 16 are processed to provide an appropriate address translation, such that the instant messages sent to the user device 20 will indicate that they are being sent from the common address. Similarly, instant messages sent from the user device 20 will be modified as necessary to be sent to the information agent 14 for handling. In essence, the IM proxy server 16 acts as a liaison providing address translation for the instant messaging session. Further, when queuing is involved, the instant messaging proxy server 16 can send messages indicating that the instant message has been queued, that an information agent 14 has been assigned, and the like, to the user prior to the information agent 14 being assigned the instant message or responding to the instant message.

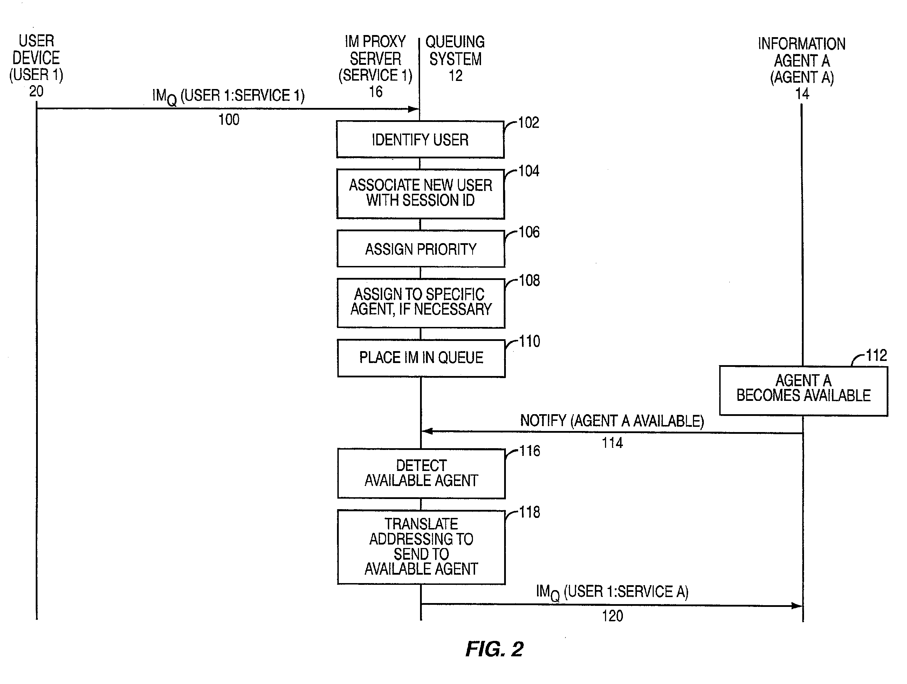

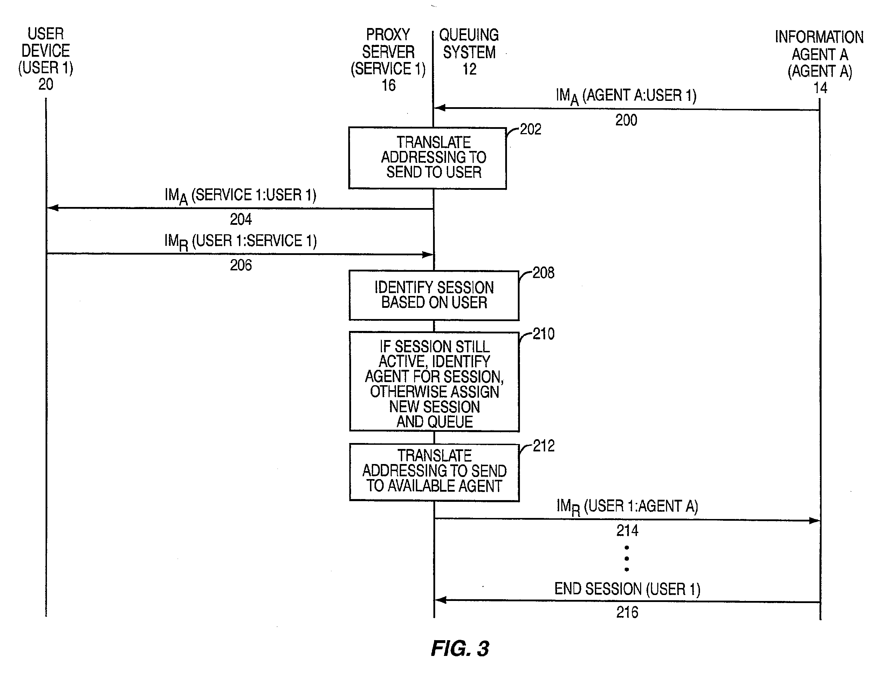

The following communication flow diagrams illustrate how an initial instant message is queued and then routed to an appropriate information agent 14 once the information agent 14 becomes available (Figure 2), and numerous techniques by which ongoing instant messages can be sent back and forth between the user and information agent 14 for a given instant messaging session (Figures 3, 4, and 5). Although those skilled in the art will recognize numerous instant messaging techniques, the three preferred techniques provide for the instant messaging session to have instant messages in both directions flow through the IM proxy server 16, which will provide the necessary address translation for the instant messages flowing in both directions between the user and the information agent 14; to have messages to an information agent 14 pass through the IM proxy server 16 and those back to the user be sent directly to the user; and to have all messages to and from the user and information agent 14 sent directly therebetween. Notably, it may be preferred to route all messages through the IM proxy server 16 when it is desirable to track the number of instant messages in a session or gather other statistics about the instant messages or the session.

Referring now to Figure 2, an initial instant messaging query (IM_{Q}) is sent from the user device 20 having an address User 1 to a common address Service 1 associated with the information service bureau. Since the functionality of the IM proxy server 16 and the queuing system 12 may be shared or otherwise allocated in numerous ways, the processing provided by either of these functions is combined for the purposes of illustration. Thus, the instant messaging query IM_{Q} is received by the IM proxy server 16/queuing system 12 (step 100), wherein the user is identified (step 102). Assuming that this is an initial message to initiate an instant messaging session, a session ID is associated with the new user (step 104). Based on the identity of the user, a priority may be assigned, wherein different users may have different priority levels, which dictate their relative placement in a queue (step 106). Further, the user ID or other indicia in the message may dictate that a specific information agent 14 or type of information agent 14 be assigned to the instant message when that information agent 14 becomes available. As such, the instant message may be assigned to a specific information agent 14 or type of information agent 14, if necessary (step 108), and then placed in an appropriate queue (step 110) until an appropriate information agent 14 becomes available.

Notably, the functionality described herein can be distributed to various degrees between the IM proxy server 16 and the queuing system 12. As such, the use of the term "IM proxy server 16/queuing system 12" represents the cooperative nature of the two systems to provide the described function, as well as one system providing a function to the exclusion of the other. Once an information agent 14, information agent A in this example, becomes available (step 112), the information agent 14 may be configured to notify the IM proxy server 16/queuing system 12 of her availability (step 114). The IM proxy server 16/queuing system 12 will detect that the information agent 14 is available (step 116), provide any necessary addressing translation to enable forwarding the instant message to the information agent 14 (step 118), and send the instant message, IM_{Q}, to information agent A (step 120).

Although the preferred embodiment allows the instant message to simply be forwarded from the IM proxy server 16 to the information agent 14 through address translation, proprietary message delivery techniques may be used, wherein the instant message is packaged in another message and sent back and forth between the IM proxy server 16 and the information agent 14. Regardless of form, the information agent 14, Agent A, at this point is in possession of the instant message IM_{Q} and takes the necessary steps to respond to the user with an instant message answer, IM_{A}.

A first technique for delivering the instant message answer IM_{A} to the user is provided in Figure 3. In this example, the information agent 14 sends the instant message answer IM_{A} to the IM proxy server 16 (step 200), which will provide the necessary address translation for sending the instant message answer IM_{A} to the user (step 202), and send the instant message answer IM_{A} to the user via the user device 20 (step 204). The instant message answer received by the user device 20 may appear as if it was sent from the common address, Service 1, based on the address translation function provided by the IM proxy server 16. In response to the instant message answer IM_{A}, the user may send an instant message response IM_{R} back to the IM proxy server 16 using the common address for the information service bureau (step 206). The IM proxy server 16/queuing system 12 will identify the IM session based on the user (step 208), and if the session is still active, identify the information agent 14 for the session (step 210). If the session is not active, the instant message is queued and a new session ID is provided as described above with respect to Figure 1.

Assuming the session is still active, the IM proxy server 16/queuing system 12 will provide the necessary address translation for sending the instant message to the appropriate information agent 14, Agent A (step 212), and send the instant message response IM_{R} to the information agent 14, Agent A (step 214). The process will cycle until the session either times out or is otherwise ended, preferably by the information agent 14 sending an End Session message to the IM proxy server 16/queuing system 12 (step 216). As illustrated in this embodiment, instant messages sent back and forth between the user and the information agent 14 are passed through the IM proxy server 16, which will provide the necessary address translation to ensure that messages are sent to the appropriate information agent 14 and that all messages sent to the user appear as if they came from the common address. All instant messages that are directed to the common address and associated with a currently active session will be routed to the appropriate information agent 14.

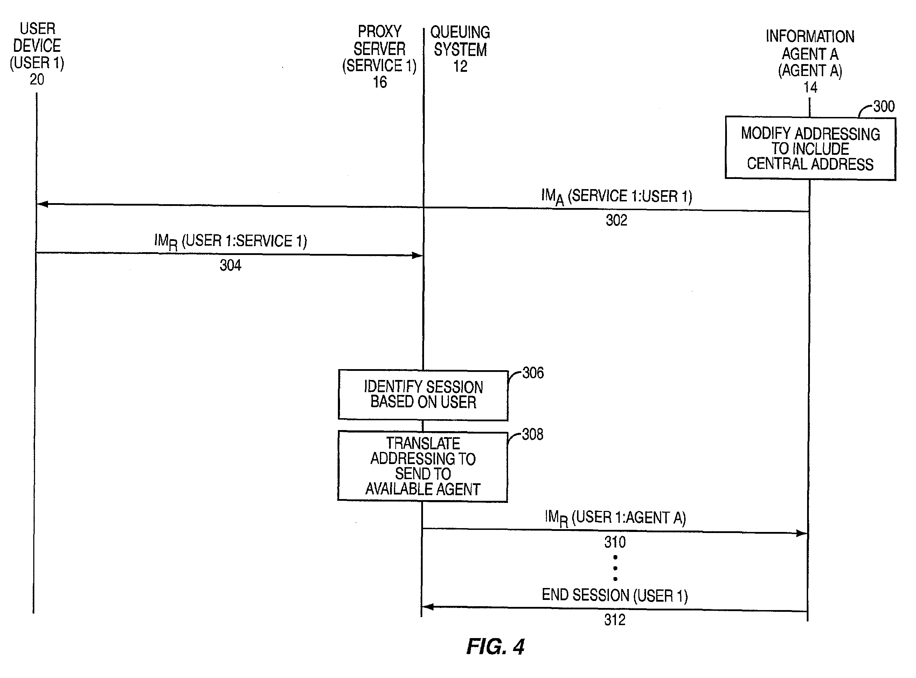

The instant messaging process described in the communication flow of Figure 4 provides for instant messages associated with an active session to be passed through the IM proxy server 16 when sent from the user to the information agent 14, and to be sent directly to the user from the information agent 14. Accordingly, the instant messaging answer IM_{A} provided by the information agent 14, Agent A, can be sent directly to the user device 20 using the user's address; however, the information agent 14 is configured to modify the addressing for the instant messaging answer IM_{A} (step 300) such that the instant messaging answer appears to be sent from the common address, Service 1 (step 302). The instant message response IM_{R} provided by the user will be sent to the common address, Service 1, and as such, received by the IM proxy server 16 (step 304). The IM proxy server 16/queuing system 12 will again identify the session based on the user (step 306), and assuming the session is still active, provide the appropriate address translation such that the instant message response IM_{R} is sent to the appropriate information agent (step 308) and then send the instant message response IM_{R} to the appropriate information agent 14 (step 310). The process will continue until the session ends, again, by having the information agent 14 send an End Session message to the IM proxy server 16/queuing system 12 to end the session (step 312) via instant messaging or other messaging technique.

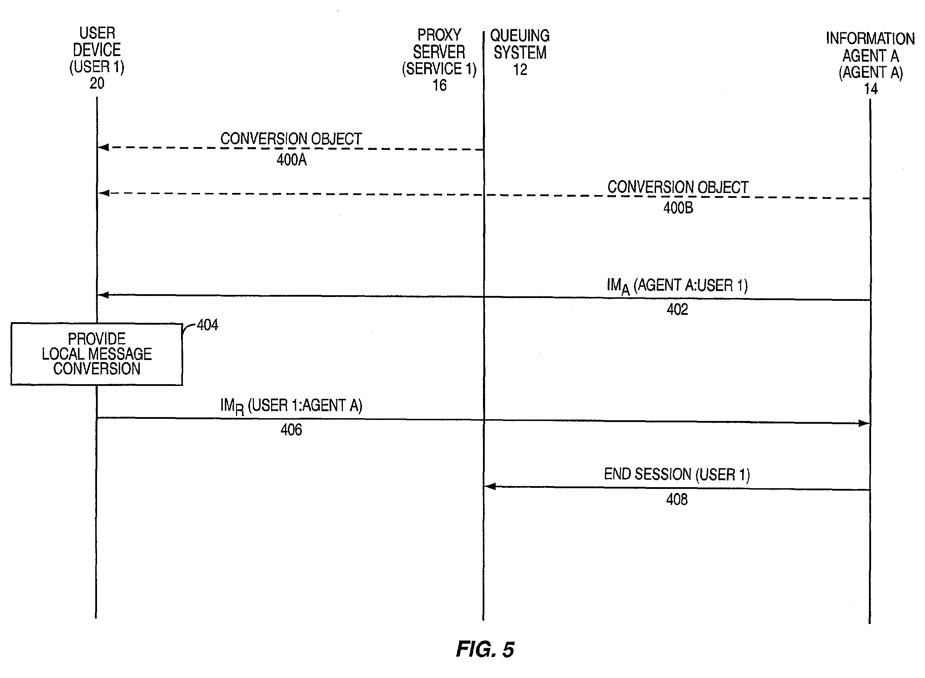

In the instant messaging process illustrated in Figure 5, an object is sent to the user device 20. The object may be any type of application, program, or code set that is executable on the user device 20 and operates to modify the appearance of addresses and instant messages received from an information agent 14, such that the instant messages appear to come from the common address, Service 1. As such, an instant message may be sent directly from the information agent 14 Agent A to the user device 20, yet the object on the user device 20 will modify how the message is presented to the user, such that the instant message appears to come from the common address. Instant messages in response to the incoming instant message from the information agent 14 will be sent to the information agent 14 directly. As such, subsequent contact through instant messaging with the information service bureau will be directed to the common address, and not to the information agent 14 who assisted the user in a previous session.

Accordingly, the objects may be sent to the user from either the IM proxy server 16/queuing system 12 (step 400A) or the information agent 14 directly (step 400B). Once the object is loaded on the user device 20, it functions to convert the appearance of the address (identity) associated with that of the information agent 14 to that of the information service bureau. The instant messaging answer IM_{A} can then be sent directly from the information agent 14, Agent A, to the user (step 402), wherein the user device 20, by running the object, will provide the local message conversion and provide the instant message to the user (step 404). Again, the instant message will appear as if it came from the central address, not that of the information agent 14, Agent A. The user may then respond, wherein the user device 20 will send an instant message reply IM_{R} directly to the information agent 14, Agent A, under the control of the object (step 406). The process can continue until the session ends, by the information agent 14 sending an End Session message to the IM proxy server 16/queuing system 12 (step 408).

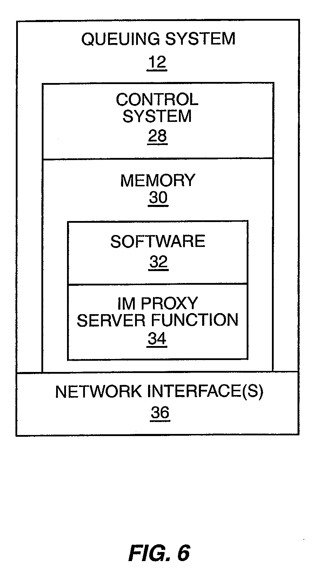

Turning now to Figure 6, an exemplary queuing system 12 is illustrated as having a control system 28 with sufficient memory 30 containing the necessary software 32 for providing a queuing function and operation as described above. In one embodiment, an instant messaging proxy server function 34 may be implemented on the queuing system 12. Further, the control system 28 is also associated with one or more network interfaces 36 to facilitate communications with the user device 20, information agents 14, and the IM proxy server 16, as the case may be.

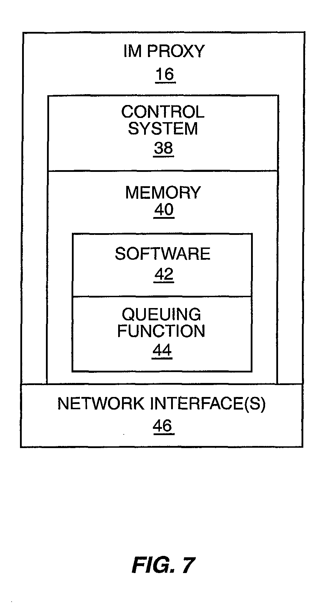

Similarly, an IM proxy server 16 is illustrated in Figure 7, and will contain a control system 38 having sufficient memory 40 for the necessary software 42 to provide the proxy function and operate as described above. In an integrated system based on the IM proxy server 16, a queuing function 44 may be incorporated therein. The IM proxy server 16 will also include at least one network interface 46 facilitating communications with the user device 20, information agents 14, and queuing system 12 as necessary.

Accordingly, the present invention allows an instant messaging user to send an initial instant messaging request to a common address, which represents a generic or pooled resource, rather than just another individual. The message is sent to this generic or pooled resource, and then can be routed to a number of supporting information agents 14 immediately or after being queued, wherein queuing can take any number of forms and provide various queuing priorities associated with a given user. To facilitate the service concept, the instant messages for a given session are associated with a session ID, such that an association can be maintained between the individual and a particular information agent 14 over a series of instant messages. Throughout the session, instant messages from the individual information agent 14 may appear as if they came from the common address, rather than from an individual agent address. After a period of time or upon instruction from an information agent 14, a session can be terminated, wherein subsequent messages from the user are treated as a new request. Those skilled in the art will recognize numerous modifications to the embodiments described herein, such as allowing a user to request a particular information agent 14 on a subsequent session request. In such case, the IM proxy server 16 or queuing system 12 can identify the user and any indicia in the instant message identifying a particular information agent 14, and queue the message accordingly.

## Claims

1. A method facilitating instant messaging with an information service bureau having a plurality of information agents, the method comprising:
a) receiving first instant messages directed to a common address from a plurality of users, the common address to be used by the plurality of users seeking information from the information service bureau; and
b) routing the first instant messages to selected information agents.

2. The method of claim 1 further comprising:
a) placing the first instant messages in a queue;
b) determining when ones of the information agents become available; and
c) sending the first instant messages to selected ones of the information agents as they become available.

3. The method of claim 2 wherein the plurality of users are associated with a plurality of priority levels and each of the first instant messages is placed in the queue based on a corresponding one of the plurality of priority levels.

4. The method of claim 1 wherein for at least one of the first instant messages, further comprising identifying a desired one of the plurality of information agents from the one of the first instant messages and routing the one of the first instant messages to the desired one of the plurality of information agents.

5. The method of claim 1 wherein for at least one of the first instant messages, further comprising determining a type of information being sought from the one of the first instant messages and routing the one of the first instant messages to one of the plurality of information agents, which is capable of providing the type of information being sought.

6. The method of claim 1 further comprising for each of the first instant messages:
a) creating a session associated with a corresponding user, which is one of the plurality of users, wherein the first instant message was routed to a select information agent, which is one of the plurality of information agents;
b) receiving subsequent messages directed to the common address from the user;
c) associating the subsequent messages with the session; and
d) routing the subsequent messages to the select information agent.

7. The method of claim 6 wherein when each of the first instant messages are queued prior to being routed to the select information agent, the subsequent messages are routed to the select information agent without being queued.

8. The method of claim 6 further comprising terminating the session, wherein after the session is terminated, a subsequent message from the user triggers creation of a new session.

9. The method of claim 8 wherein the session is terminated after a defined period of time.

10. The method of claim 8 further comprising receiving a terminate session message from the select information agent, wherein the session is terminated upon receiving the terminate session message.

11. The method of claim 1 further comprising modifying the addressing of the first instant messages to facilitate routing of the first instant messages to the plurality of information agents using instant messaging.

12. The method of claim 1 further comprising receiving second messages from the information agents in response to the first messages and sending the second messages to the respective plurality of users.

13. The method of claim 1 wherein second instant messages to the respective plurality of users from the information agents in response to the first messages are sent directly to the plurality of users using instant messaging.

14. The method of claim 13 wherein subsequent instant messages sent from the plurality of users after the first instant messages are sent directly to the information agents.

15. The method of claim 13 further comprising:
a) receiving subsequent messages directed to the common address from the plurality of users; and
b) routing the subsequent messages to the information agents.

16. The method of claim 1 further comprising sending objects to the plurality of users, each object adapted to modify messages received from the information agents to appear as if they were sent from the common address.

17. A system facilitating instant messaging with an information service bureau having a plurality of information agents, the method comprising:
a) at least one interface facilitating instant messaging; and
b) at least one control system associated with the at least one interface and adapted to:
i) receive first instant messages directed to a common address from a plurality of users, the common address to be used by the plurality of users seeking information from the information service bureau; and
ii) route the first instant messages to selected information agents.
